Europäisches Patentamt

European Patent Office

Office européen des brevets

(11) Veröffentlichungsnummer : **0 518 077 A1**

(19)

## (12) EUROPÄISCHE PATENTANMELDUNG

(21) Anmeldenummer : 92108305.1

(22) Anmeldetag : 16.05.92

(51) Int. Cl.⁵ : **C04B 35/58, C04B 35/65, B32B 18/00, C22C 29/16**

(30) Priorität : 08.06.91 DE 4118943

(43) Veröffentlichungstag der Anmeldung :
16.12.92 Patentblatt 92/51

(84) Benannte Vertragsstaaten :
AT BE DE ES FR GB IT NL PT

(71) Anmelder : VAW aluminium AG
Georg-von-Boeselager-Strasse 25
W-5300 Bonn 1 (DE)

(72) Erfinder : Scholz, Hermann
Glindweg 11
W-2000 Hamburg 60 (DE)

Erfinder : Greil, Peter, Prof. Dr.
Dahlienweg 14
W-2105 Seevetal (DE)
Erfinder : Travitzky, Nahum, Dr.
Koloshey, Ha-Shoa 17/11
Kiriat Shmuel, Haifa (IL)
Erfinder : Feige, Reinhard
Marienstrasse 25
W-5300 Bonn 3 (DE)
Erfinder : Thome, Roland, Dr.
Brüsseler Strasse 58
W-5300 Bonn 1 (DE)

(74) Vertreter : Müller-Wolff, Thomas, Dipl.-Ing.
VAW aluminium AG
Georg-von-Boeselager-Strasse 25 Postfach
2468
W-5300 Bonn 1 (DE)

(54) **Metall-Keramik-Verbundkörper aus einer nitridischen Matrix, die Einlagerungen einer dreidimensional-vernetzten aluminiumhaltigen Metallphase enthalten.**

㋗   Metall-Keramik-Verbundkörper aus einer nitridischen Matrix, die Einlagerungen einer dreidimensional-vernetzten aluminiumhaltigen Metallphase enthalten, gekennzeichnet durch ein Durchdringungsgefüge von 15 - 50 Vol.-% Aluminium und 1 - 30 Vol.-% Silizium in einer Matrix aus feinverteiltem Aluminiumnitrid, und Verfahren zur Herstellung von Metall-Keramik-Verbundkörpern. Es sollen Metallnitrid-Metall Verbundkörper hoher Verschleißbeständigkeit, Raumtemperatur- und Hochtemperaturfestigkeit und Härte sowie ein Verfahren zu ihrer Herstellung durch Reaktionsinfiltration eines beliebig geformten, porösen keramischen Vorkörpers mit einer Metallschmelze und gleichzeitiger oder verzögerter Austauschreaktion entwickelt werden.

EP 0 518 077 A1

Die Erfindung betrifft Metall-Keramik-Verbundkörper aus einer nitridischen Matrix, die Einlagerungen einer dreidimensional-vernetzten aluminiumhaltigen Metallphase enthalten.

Bisher gelang es nur mit stark sauerstoffaffinen Desoxidations-legierungen d. h. hoch Ca-haltige Si-Al-Legierungen mit Ca-Gehalten von 10 bis 33 Gew.-% poröse Siliziumnitridkörper bei Temperaturen zwischen 1200 und 1400 °C zu infiltrieren [siehe Leimer und Gugel in Z. Metallkde. 66 (1975) 570]. Obgleich die Tränkungsversuche im Vakuum bei ca. $10^{-2}$ Torr durchgeführt wurden, konnte RBSN mit 71%-iger theoretischer Dichte (Annasinid 98; Annawerk) nicht infiltriert werden. Neben der Bildungsreaktion von Calciumsilikaten und ternären Calciumsilikatnitriden wurde die Bildung von Aluminiumnitrid beobachtet.

Durch Druckinfiltration (> 10 bar) konnte dagegen auch RBSN mit Aluminium infiltriert werden und dichte metallkeramische Verbundkörper hergestellt werden, wobei durch Anwendung des Druckes die Infiltration beschleunigt und eine Reaktion zum AlN verhindert wird (Claussen und Travitzky, Int. Patent Nr. XO 90(01472). Eine Reaktion zwischen infiltriertem Aluminium und dem RBSN unter AlN Bildung tritt nur in einer dünnen Schicht (ca. 50 μm) an den Probenoberflächen auf.

Hochfeste Aluminiumnitrid/Aluminium Verbundwerkstoffe mit 3-Punkt-Biegebruchfestigkeiten bis zu 900 MPa wurden durch drucklose Infiltration von porösen AlN-Körpern durch flüssiges Aluminium bei Temperaturen von 1130 °C bis 1200 °C hergestellt (Toy und Scott, J. Am. Ceram. Soc. 73 [1] (1990) 97).

Im Gegensatz zu der Metallinfiltration geht eine Gruppe neu entwickelter Reaktionsverfahren von der gerichteten Oxidation bzw. Nitridierung von Al-Legierungsschmelzen in $O_2$ oder $N_2$-Atmosphäre bei Temperaturen zwischen 900 und 1400 °C aus, um dichte Keramik-Metall-Verbundwerkstoffe herzustellen (DIMOX™-Verfahren; z. B. EP 0 193 292, EP 0 261 055, US Pat. Nr. 4,713,360, EP 0 261 065). Das DIMOX-Verfahren beruht auf einer flüssig-gas Reaktion zwischen einer Metallschmelze und einem gasförmigen Oxidanten ($O_2$, $N_2$) bei Temperaturen zwischen 800 und 1400 °C. Durch Aufwachsen einer keramischen Phase mit Porenkanälen auf der Schmelzoberfläche wird kontinuierlich Metallschmelze an die Reaktionsfront transportiert und durch Oxidation bzw. Nitridierung entsteht ein jeweils dreidimensional vernetztes Oxid-/Metall-bzw. Nitrid/Metall-Verbundgefüge (Newkirk et al., J. Mat. Res. 1 [1] (1986) 81). Durch Hineinwachsen des Metall/Keramik Verbundes in ein inertes Füllerbett aus keramischen Partikeln oder Fasern kann das Gefüge in weiten Grenzen variiert werden.

Neben der gerichteten Oxidation bzw. Nitridrierung von Metallschmelzen wird die Kerstellung von Metall-Keramik Verbundwerkstoffen durch reaktive Infiltration und Austauschreaktionen im System Metall (insbes. Aluminium und Zirkonium) - Borcarbid unter Bildung von Metallborid/Metallcarbid/Metall-Verbundkörpern mit Biegebruchfestigkeiten bis zu 900 MPa und Bruchzähigkeiten bis 18 MPam$^{1/2}$ beschrieben (EP Nr. 0 299 905). Zur Kerstellung von SiC-verstärkten Metallmatrix Verbundwerkstoffen durch drucklose Infiltration von porösen SiC-Körpern durch Aluminiumlegierungsschmelzen wurde das sogenannte PRIMEX™-Verfahren entwickelt (AU-Patent A-41659/89). Nach gleichem Prinzip gelang es, poröse Aluminiumoxidkörper drucklos mit Al-Si-Mg Legierungen zu infiltrieren, allerdings nur in Stickstoff oder stickstoffhaltigen Atmosphären unter Zumischung von Wasserstoff oder Argon (M. K. Aghajanian, J.T. Burke, D. R. White, A.S. Nagelberg; Proc. 34th Int. SAMPE Symp.; May 8-11 (1989) 817).

Im Gegensatz zur Metallinfiltration und der gerichteten Schmelz-oxidation wurden verschiedene Austauschreaktionen zwischen festen oxidischen Verbindungen und Aluminiumnitrid zur Herstellung von Nitrid/Oxid-Verbundwerkstoffen ausgenutzt (Mocellin; Rev. Chim. Miner. 23 (1986) 80; J. Mat. Sci. 20 (1985) 3697; C. R. Hebd. Seances Acad. Sci., Ser. C, 279 (1974) 943). Die Oxide der Metalle Zr, Ti oder Si wurden jeweils als Pulvermischung mit Aluminiumnitrid zu ihren Nitriden und Aluminiumoxid umgesetzt, wobei im Falle der Reaktion zwischen Siliziumoxid und Aluminiumnitrid Temperaturen von 1700 °C bei Haltezeiten von 70 Stunden zur Umsetzung zu β-Siliziumnitrid und α-Aluminiumoxid benötigt wurden.

Aufgabe der vorliegenden Erfindung ist es, Metallnitrid-Metall Verbundkörper hoher Verschleißbeständigkeit, Raumtemperatur- und Hochtemperaturfestigkeit und Härte sowie ein Verfahren zur ihrer Kerstellung durch Reaktionsinfiltration eines beliebig geformten, porösen keramischen Vorkörpers mit einer Metallschmelze und gleichzeitiger oder verzögerter Austauschreaktion zu entwickeln. Dies gelingt dadurch, daß ein keramischer Vorkörper mit dem infiltrierten Metall teilweise oder vollständig umgesetzt wird, Bild 1. Sowohl die Infiltration als auch die interne Nitridierungsreaktion werden durch den in der Stickstoff- bzw. Inertgasatmosphäre eingestellten Sauerstoffpartialdruck gesteuert.

Der metallkeramische Verbundkörper ist gekennzeichnet durch eine nitridische Matrix und eine dreidimensional vernetzte Metallphase, die Einlagerungen von Hartstoffteilchen und/oder anderen Verstärkungskomponenten enthalten kann, dadurch herzustellen, daß ein poröser Metallnitridkörper durch Aluminium oder Aluminiumlegierungen mit Elementen der Gruppe Li, Na, Mg, Ba, Si, Ti, V, Cr, Mn, Fe, Co, Ni, Cu, Zr, Mo, Hf, La infiltriert und unter Stickstoffabgabe an das Infiltrat zum Metall reduziert wird und sich somit ein Nitrid des Metallinfiltrats bildet. Vorzugsweise erfolgt die Reaktionsinfiltration eines porösen Siliziumnitrid- oder Aluminiumoxidkörpers mit Aluminium oder Aluminium-Magnesium Legierungen.

Die Erfindung beruht auf der überraschenden Feststellung, daß die drucklose Reaktionsinfiltration von porösem $Si_3N_4$ durch Al(Mg)-Legierungen in Argon- oder Stickstoffatmosphäre und sogar an Luft zu einem dichten Aluminiumnitrid-Metall Verbundkörper führt. Weiterhin ist es entgegen bisheriger Aussagen in der Literatur möglich, poröses $Si_3N_4$ in Ar- oder $N_2$-Atmosphäre mit Reinaluminium auch ohne oberflächenaktive Legierungselemente wie Ca, Mg, Li etc. drucklos zu infiltrieren und zu AlN umzusetzen.

Im Gegensatz zu den angeführten Patenten und Literaturstellen gelang es mit dem im Folgenden beschriebenen neuartigen Verfahren erstmals, poröse Siliziumnitridkörper mit Aluminium-Magnesium Legierungen und auch mit Reinaluminium drucklos vollständig zu infiltrieren und zu einem dichten Aluminiumnitrid/Aluminium/ Silizium Verbundkörper mit einstellbarem Restsilizium- bzw. Restsiliziumnitridgehalt umzusetzen. Während Leimer und Gugel zur Infiltration von porösen $Si_3N_4$-Körpern hochcalciumhaltige Al,Si-Desoxidationslegierungen benötigten, die unter Calciumsilikatbildung Benetzung ermöglichen, lassen sich nach dem erfindungsgemäßen Verfahren Reinaluminium oder niedrig Magnesiumdotierte Al-Legierungen zur Infiltration von $Si_3N_4$ einsetzen.

In den folgenden Ausführungen zur Beschreibung der Erfindung steht Siliziumnitrid aus illustrativen Gründen stellvertretend auch für andere Metallnitride, die thermodynamisch weniger stabil sind als das sich durch Reaktion mit dem Metallinfiltrat bildende Nitrid. Desweiteren beschränkt sich die Erfindung nicht auf .Aluminium als Metallinfiltrat, das stellvertretend steht für Aluminiumlegierungen oder Metalle die durch Reduktion des porösen Nitridkörpers ein stabileres Nitrid bilden.

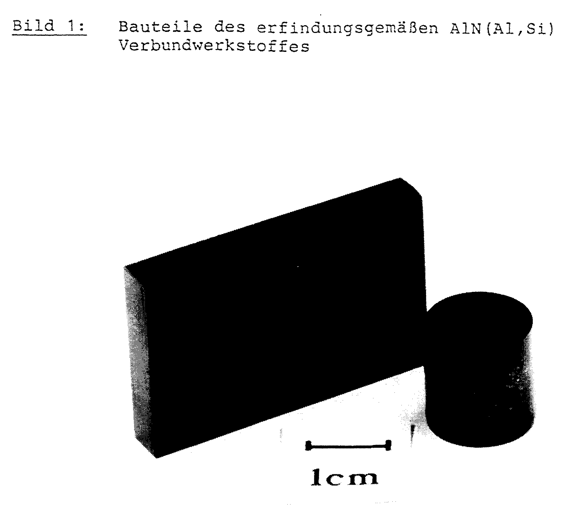

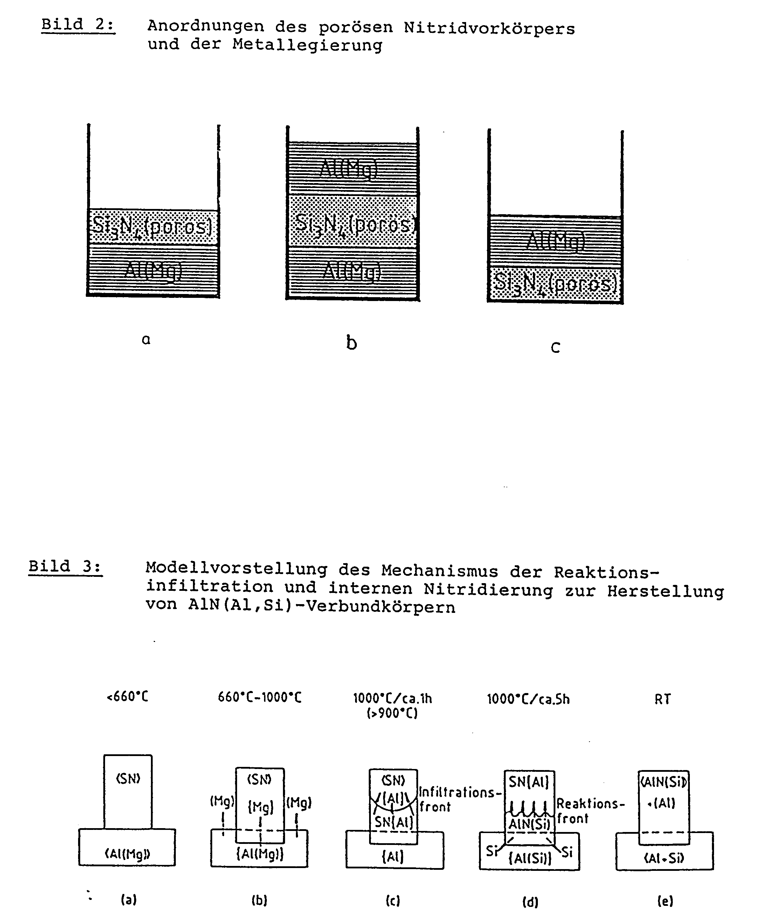

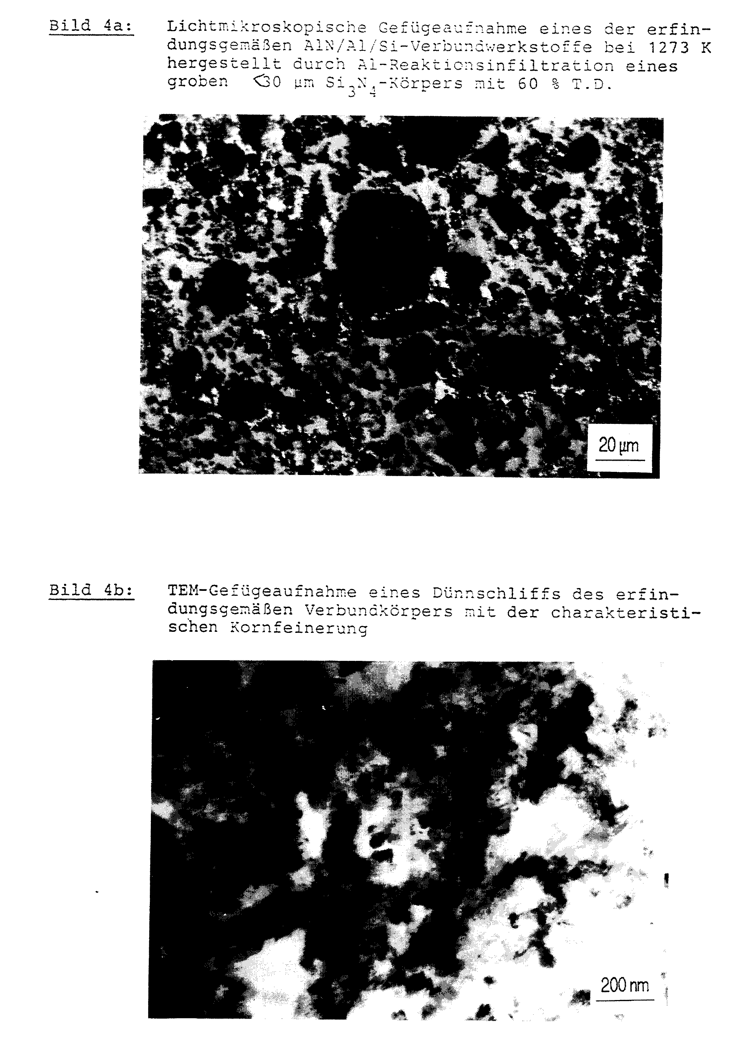

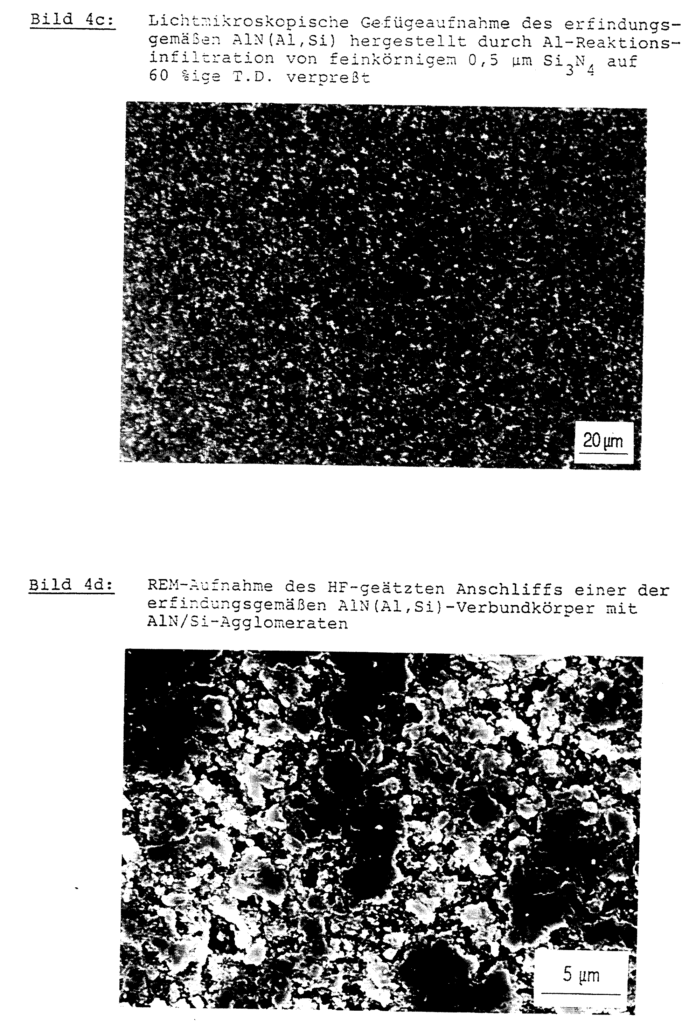

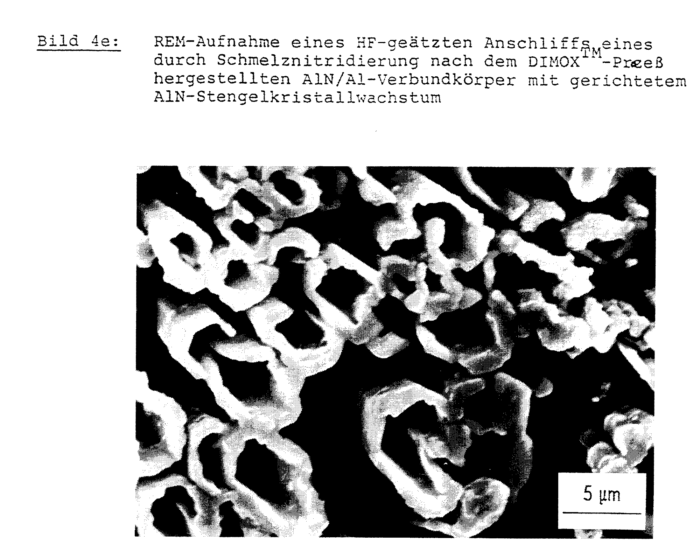

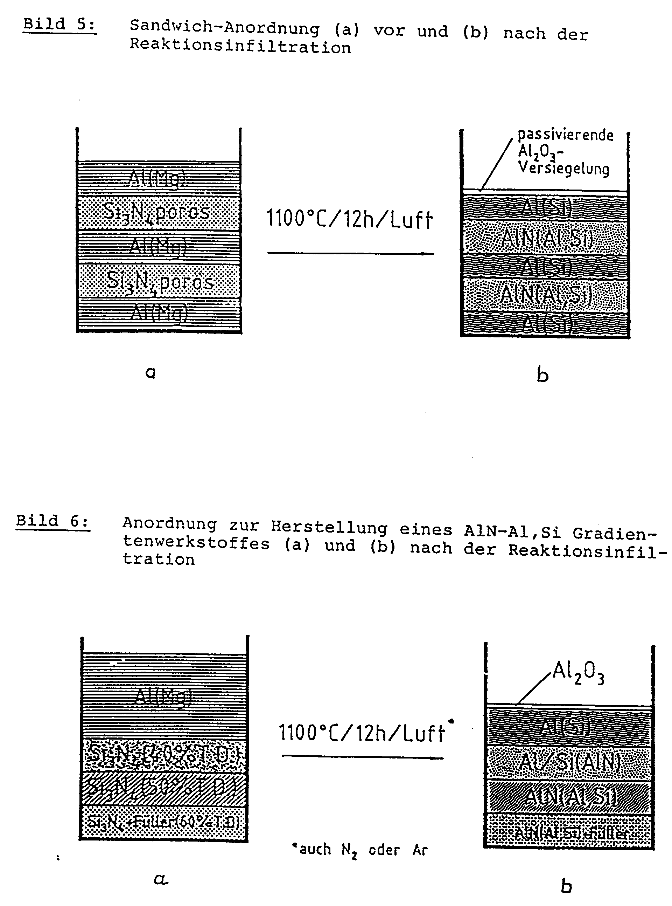

Das erfindungsgemäße Verfahren zur Herstellung des metallkeramischen Verbundkörpers ist dadurch gekennzeichnet, daß ein poröser Nitridkörper ($Si_3N_4$), der nach einem der konventionellen Formgebungsverfahren oder durch Reaktionsbinden (RBSN) hergestellt ist, gemäß der Anordnungen in Bild 2a-c auf, zwischen oder unter das Aluminium in einen dünnwandigen $Al_2O_3$-Tiegel gelegt und in einem widerstandsbeheizten oder induktionsbeheizten Ofen reaktonsinfiltriert wird. Weiterhin kann eine tiegellose Anordnung gewählt werden, wobei das Silziumnitrid durch die Al-Legierung eingekapselt wird und so in Luftatmosphäre im Kammer- oder Muffelofen reaktionsinfiltriert wird. Nach dem momentanen Stand der Forschung wird für die Reaktionsinfiltration von porösem $Si_3N_4$ durch Al(Mg)-Legierungen der in Abb. 3 skizzierte Mechanismus angenommen.

Der Nitridvorkörper beliebiger Form, welcher auch durch Bearbeitung des Grünkörpers verändert werden kann, besteht aus Siliziumnitridpulver mit einem mittleren Korndurchmesser im Bereich von 0,1 µm bis 200 µm, vorzugsweise jedoch von 0,5 bis 40 µm, wobei als wesentlicher Aspekt der Erfindung während der Umsetzungsreaktion eine Kornfeinerung

grober, sehr kostengünstiger $Si_3N_4$-Partikel (< 30 µm) zu AlN-Partikeln < 100 nm eintritt. Bild 4a zeigt eine lichtmikroskopische Gefügeaufnahme eines der erfindungsgemäßen Verbundkörper, der aus einem mit 800 MPa kaltisostatisch verdichteten (60 % T.D.) $Si_3N_4$-Pulver mit einer mittleren Korngröße von ca. 30 µm durch Reaktionsinfiltration mit einer Al-Mg2,5-Legierung hergestellt wurde und zu einem dichten AlN(Al,Si) Verbund führt. Die ursprüngliche Korngröße des $Si_3N_4$ läßt sich aus der agglomeratähnlichen dunklen Phase ableiten, die aus einem Druchdringungsgefüge von feinverteiltem AlN in Al-Si Restmetall besteht. Der kryptokristalline Charakter der AlN Phase mit mittleren AlN-Korngrößen < 100 nm läßt sich durch Transmissionselektronenmikroskopie auflösen, Bild 4b. Reaktionsinfiltration von feinkörnigerem $Si_3N_4$ mit einem mittleren Korndurchmesser von 0,5 µm (LC-12, H. C. Starck, Berlin) führt zu einem entsprechend homogenen AlN(Al,Si) Gefüge ohne Agglomerate, wie eine lichtmikroskopische Aufnahme des polierten Anschliffs zeigt, Bild 4c. TEM-Analyse dieser homogenen Gefüge zeigt den gleichen Kornfeinerungseffekt wie die agglomerierten, grobkörnigen Gefüge mit AM-Kristalliten < 100 µm eingebettet in Al zwischen Si-Ausscheidungen. Der grundsätzlich verschiedene Gefügeaufbau des reaktionsinfiltrierten Materials gegenüber dem nach dem DIMOX™-Verfahren schmelznitridierten wird anhand der Bilder 4d und 4e offensichtlich. In beiden Fällen handelt es sich um rasterelektronenmikroskopische Aufnahmen von in Flußsäure geätzten Anschliffen, die durch Herauslösen des Aluminiums die Morphologie des Aluminiumnitrids freilegen. Bei der Reaktionsinfiltration führt die "in-situ" Umsetzung des $Si_3N_4$ mit dem infiltrierten Al zu dreidimensional vernetzten AlN/Si Agglomeraten, deren Form und Größe durch die Beschaffenheit der ursprünglichen $Si_3N_4$-Körner bestimmt ist und die keine Textur aufweisen, sondern homogen ungerichtet vorliegen, Bild 4d. Dagegen zeigt das durch Gasphasennitridierung aus der Al-Schmelze herauswachsende AlN eine charakteristische Textur mit AlN-Stengelwachstum parallel zu der kristallographischen Richtung der c-Achse, Bild 4e, wie durch Textur- und Röntgenbeugungsanalyse bestätigt werden konnte.

Die Dichte des infiltrierbaren $Si_3N_4$-Körpers kann im Bereich von 20 bis 80 % der theoretischen Dichte (T.D.) von $Si_3N_4$ liegen, wobei hohe Dichte zu einem hohen keramischen Anteil (> 50 Vol.-%) des Verbundwerkstoffes führt, mit entsprechend hoher Härte und Festigkeit, während niedrige Dichte des $Si_3N_4$-Vorkörpers zu einem Verbundkörper mit hohem Metallanteil > 50 Vol.-% und entsprechend hoher Duktilität und Zähigkeit führt.

Die Zusammensetzung der metallischen Komponente in dem erfindungsgemäßen Verbundkörper kann durch die Menge an Infiltrat bzw. die Größe des Metallreservoirs eingestellt werden. Ein kleines Al-Reservoir, das gerade ausreicht, den porösen Si$_3$N$_4$-Körper zu infiltrieren, führt zu einem hohen Anteil an hartem, refraktärem aber spröden Silizium in der Restmetallphase, während ein grobes Al-Reservoir aufgrund des Konzentrationsausgleichs durch Diffusion den Si-Gehalt in der Restmetallphase des Verbundkörpers stark erniedrigt und das duktile aber weiche und hochtemperaturunbeständige Aluminium zur dominierenden Metallphase werden läßt.

Die Porosität des Si$_3$N$_4$-Körpers muß aus offenen, durchströmbaren Kanalporen mit Porendurchmessern zwischen 50 nm (RBSN) und 200 μm (lose Schüttung) bestehen. Die Reaktionsinfiltration wird bei einer Temperatur im Bereich zwischen 800 und 1500 °C, vorzugsweise jedoch bei 900 bis 1200 °C durchgeführt. Als Infiltrations- und Reaktionsatmosphäre ist Stickstoff, Formiergas (95 Vol.-% N$_2$/5 Vol.-% H$_2$), Ammoniak, Argon, Kelium oder Luft auch als Mischung oder im zeitlichen Wechsel geeignet, vorzugsweise wird Luft, Argon oder Stickstoff mit Sauerstoffzumischung von 10$^{-4}$ bis 5 Vol.-% verwendet. Der Gasdruck während der Reaktionsinfiltration beträgt 10$^{-8}$ bis 200 MPa, vorzugsweise jedoch 0,01 bis 1 MPa, wobei der Gasdruck auch aus Inertgas mit einstellbaren Partialdrucken eines Reaktionsgases zusammengesetzt sein kann. Die interne Nitridierung des Aluminiums durch Reduktion des Siliziumnitrids kann durch externe Nitridierung mit Stickstoff-, Ammoniak- oder Formiergas unterstützt werden.

Bei einer Anordnung entsprechend Abb. 2b oder 2c sowie durch tiegellose Kapseltechnik läßt sich die erfindungsgemäße Reaktionsinfiltration auch an Luft in einem Kammerofen durchführen, wobei der infiltrierte Si$_3$N$_4$-Körper wie in inerter Atmosphäre zu einem dichten AlN(Al,Si)-Verbundkörper umgesetzt wird. Die der Luftatmosphäre ausgesetzte Aluminiumoberfläche bildet eine oxidationsbeständige, passivierende Aluminiumoxidschicht aus. Weiterhin lassen sich durch "Sandwich"-Anordnung (s. Bild 5) mehrschichtige Verbundkörper mit zweidimensionalem Aufbau abwechselnd harter metallkeramischer und duktiler metallischer Phasen herstellen.

Nach dem gleichen Prinzip läßt sich in Stickstoffatmosphäre ein AlN-haltiger Al$_2$O$_3$(Al,Si)-Verbundkörper herstellen, indem als poröser Vorkörper kristallines - oder amorphes Siliziumoxid, Quarz, Silikate oder Silikatgläser wie z. B. Kalk-Natron Glas verwendet wird, der durch die Al-Legierung in Stickstoffatmosphäre infiltriert wird und zum einen aufgrund der internen Redox-Reaktion zu Al$_2$O$_3$ und zum anderen aufgrund der externen Nitridierung durch das N$_2$-Reaktionsgas teilweise zu AlN umgesetzt wird.

Der erfindungsgemäße Verbundkörper kann durch Einlagerung von Hartstoffteilchen in Form von Platelets, Partikeln, Whiskern oder Fasern verstärkt werden, um den keramischen Anteil des Verbundes zu erhöhen und die mechanischen Eigenschaften zu verbessern. Der Anteil der Verstärkungskomponenten kann im umgesetzten Verbundkörper bis zu 80 Vol.-% einnehmen. Geeignete Hartstoffe zur Verstärkung des Metall-Keramik Verbundes sind z. B. Al$_2$O$_3$, AlN, AlB$_{12}$, CaB$_2$, ZrB$_2$, TiB$_2$, CrB$_2$, B$_4$C, TiC, SiC, TiN, ZrN sowie AlONe und SiAlONe. Dabei kann es sich auch um aktive Füllstoffe handeln, die während der Reaktionsinfiltration zu anderen verstärkenden Verbindungen umgesetzt werden.

Die Hochtemperaturstabilität der nach der Reaktionsinfiltration vorliegenden Restmetallphase kann durch Bildung intermetallischer Phasen gezielt gesteigert werden. Dafür sind verschiedene Methoden geeignet: a) Das Infiltrat ist eine intermetallische Verbindung oder hat eine Zusammensetzung, die nach der Reaktion mit dem porösen Si$_3$N$_4$-Körper als Restmetall eine intermetallische Verbindung ergibt; b) das Infiltrat (z. B. Titan oder Al-Ti) bildet mit dem durch Reduktion des Si$_3$N$_4$ freigesetzten Silizium intermetallische Phasen; c) dem Si$_3$N$_4$-Vorkörper sind feinverteilt Metalle zugemischt, die mit dem Infiltrat intermetallische Verbindungen eingehen.

Als weitere Variante des erfindungsgemäßen Verfahrens können nach verschiedenen Methoden Zusammensetzungsgradienten im Verbundkörper erzeugt werden: a) durch entsprechend kurze Temperaturbehandlung wird der poröse Si$_3$N$_4$-Körper durch das flüssige Aluminium vollständig infiltriert, aber in den zuletzt infiltrierten Bereichen nur unvollständig oder gar nicht zu AlN und Si umgesetzt; b) der Si$_3$N$_4$-Vorkörper hat einen Dichtegradienten durch übereinander geschichtete Si$_3$N$_4$-Platten verschiedener Dichte (s. Bild 6); c) durch Konzentrationsausgleich (Diffusion) zwischen dem während der Redox-Reaktion freigesetzten Silizium und dem im Überschuß vorliegenden Infiltrationsmetall (Al), kann gezielt ein Gradient in der Zusammensetzung der Metallphase des Verbundkörpers eingestellt werden; d) durch wechselnde Atmosphäre z. B. durch Erhöhung des Sauerstoffpartialdruckes im Reaktionsgas, oder durch Wechsel des Reaktionsgases (N$_2$, O$_2$, Ar, He, CH$_4$ oder Mischungen) während der Infiltration kann ein Phasengradient im Reaktionsprodukt erzeugt werden; e) durch kontrollierte Oxidation (900 - 1200 °C) kann gezielt eine MgAl$_2$O$_4$/Al$_2$O$_3$- bzw. AlON-Schicht erzeugt werden, so daß eine oxidische bzw. oxinitridische Oberflächenversiegelung resultiert.

In einer weiteren bevorzugten Ausführung der Erfindung kann auf den Infiltrationsschritt verzichtet werden, indem ein nitridisches Pulver mit metallischem Pulver oder metallischen Pulvermischung zu einem Grünkörper von bis zu 95%iger theoretischer Dichte, ermöglicht durch die Duktilität des Metalls, verpreßt wird und unter Beachtung der Volumenänderung während der internen Nitridierung in Edelgasatmosphäre (bevorzugt in Argon) ein nahezu dichter Verbundkörper erzeugt werden kann. Auch bei dieser Verfahrensvariante läßt sich der Verbund durch Zumischen von Hartstoffteilchen verstärken, oder durch entsprechende Metallverbindungen, die intermetallische Phasen bilden, hochtemperaturbeständig gestalten.

Allgemein sind die erfindungsgemäßen Verbundkörper hervorragend für die Verbindung mit metallischen Bauteilen geeignet. Neben der festen Bindung des Verbundkörpers an das Restmetallreservoir ist der gesamte Körper mit einer hochsiliziumhaltigen Aluminiumschicht von ca. 0,5 mm Stärke überzogen, so daß alle bekannten Methoden der Metall-Metall Füge- und Verbindungstechnik zur Verfügung stehen, die Metall-Keramik Verbundkörper in Metallkonstruktionen einzubauen.

**Beispiele**

Beispiel 1

Grobkörniges $Si_3N_4$ ($\bar{d}$ < 30 μm) wird durch kaltisostatisches Pressen (800 MPa) zu einem Formkörper mit 60 % Gründichte verpreßt und in einem Korundtiegel auf eine Al-2,5Mg Legierung mit einem Massenverhältnis $Si_3N_4$ : Al(Mg) von 1 : 2 gelegt. Durch Reaktionsinfiltration wird der poröse $Si_3N_4$-Körper bei 1000 °C in fließender $N_2$-Atmosphäre (0,05 l/min) bei einem Sauerstoffpartialdruck von < $10^{-20}$ Pa (eingestellt durch einen Überschuß an feinverteiltem Mg-Kondensat im Ofenrohr) und 0,1 MPa Umgebungsdruck während 5 Stunden Haltezeit in einem widerstandsbeheizten Rohrofen durch die Al-Legierung infiltriert und zu einem dichten Metall-Keramik Verbundkörper der röntgenographisch bestimmten Zusammensetzung von 70 Vol.-% AlN, 20 Vol.-% Al und 10 Vol.-% Si umgesetzt. Die Dichte des Metall-Keramik Verbundkörpers beträgt 3,0 g/cm³ ($\hat{=}$ 98 % theoretischer Dichte), die 4-Punkt-Biegefestigkeit ist 330 ± 30 MPa bei einer Bruchzähigkeit von 2,8 ± 0,1 MPam$^{½}$ (nach der Methode des Chevron Notched Beam) und einer Vickers Härte von 10,5 GPa ($HV_{20}$). Das Durchdringungsgefüge (s. Bild 4) besteht aus Aluminiumnitrid (dunkle Phase) und Restmetall (helle Phase). Das Aluminiumnitrid tritt in agglomeratähnlichen Formationen auf, die bis zu 30 μm groß sind und der mittleren Korngröße des eingesetzten Siliziumnitrids entsprechen, durch Kornfeinerung jedoch zu AlN-Kristallen < 1 μm umgesetzt wurden, welche feinverteilt in der Al-Si Restmetallphase eingebettet sind.

Beispiel 2

Eine lose Schüttung von feinkörnigem $Si_3N_4$ (LC-12, H. C. Starck, Berlin) mit mittlerem Korndurchmesser $\bar{d}$ < 1 μm wird unter den in Bespiel 1 genannten Bedingungen auf eine Al-2,5Mg Legierung gebracht (Massenverhältnis 1 : 4) und reaktionsinfiltriert. Der resultierende Metallmatrixverbundwerkstoff hat die röntgenographisch bestimmte Zusammensetzung: 50 Vol.-% Al, 30 Vol.-% AlN, 20 Vol.-% Si, wobei isolierte AlN- und Si-Ausscheidungen mit mittleren Korngrößen von ca. 0,5 μm bzw. 20 bis 30 μm vorliegen.

Beispiel 3

Eine Mischung von 60 Vol.-% $Si_3N_4$ ($\bar{d}$ < 30 μm) und 40 Vol.-% $TiB_2$ (< 25 μm) wird durch attritieren mit $Al_2O_3$-Kugeln hergestellt und analog zu Beispiel 1 zu einem 60 % dichten Vorkörper kaltisostatisch verpreßt und reaktionsinfiltriert. Der resultierende Metallkeramikverbundkörper hat eine Dichte von 3,6 g/cm³, eine 4-Punkt-Biegebruchfestigkeit von 320 MPa, eine Bruchzähigkeit von 4,2 MPam$^{½}$ (Indentation Strength in Bending) und eine Härte von 12,4 GPa ($HV_{20}$). Die röntgenographisch bestimmte Zusammensetzung beträgt: 20 Vol.-% $TiB_2$, 50 Vol.-% AlN, 15 Vol.-% Si und 15 Vol.-% Al.

Beispiel 4

Wie Beispiel 3 unter Verwendung einer Mischung von 60 Vol.-% $Si_3N_4$ und 40 Vol.-% $Al_2O_3$-Platelets (Dycron, Hüls) als inerte Verstärkungskomponente. Der resultierende Metall-Keramik Verbundkörper hat eine 4-Punkt Biegefestigkeit von 328 ± 6 MPa, eine Bruchzähigkeit von 4,64 ± 0,14 (nach der Methode Indentation Strength in Bending) und eine Vickers Härte von 7,35 GPa ($HV_{20}$).

Beispiel 5

Wie Beispiel 3 unter Verwendung einer Mischung von 80 Vol.-% $Si_3N_4$ und 20 Vol.-% SiC-Platelets (C-Axis, Alcan Kanada) und Reaktionsinfiltration in Ar durch eine Al(Mg2,5-Si10) Legierung, die oberhalb des kaltisostatisch gepreßten $Si_3N_4$/SiC-Formkörpers plaziert wurde.

Beispiel 6

Wie Beispiel 2 mit Reaktionsinfiltration von lose geschüttetem grobem $Si_3N_4$ ($\bar{d}$ < 47 μm) in Argonatmosphäre (Linde 4,8, $O_2$ < 3 vpm, $H_2O$ < 5 vpm) unter reduzierenden Bedingungen ($p_{O2}$ < $10^{-20}$ Pa aufgrund von Mg-Kondensat im Ofenrohr). Die röntgenographisch bestimmte Zusammensetzung des metallkeramischen Verbundkörpers mit Metallmatrix beträgt: 50 Vol.-% Al, 30 Vol.-% AlN, 20 Vol.-% Si.

Beispiel 7

Wie Beispiel 1 mit der Al-Mg2,5 Legierung oberhalb des Siliziumnitridvorkörpers in einem $Al_2O_3$ Tiegel liegend, in stationärer Luftatmosphäre bei 1000 °C und 24 stündiger Reaktionsinfiltration. Der entstehende Metall-Keramik Verbunkörper hat die Zusammensetzung 50 Vol.-% AlN, 30 Vol.-% Al und jeweils 10 Vol.-% $Si_3N_4$ und Si.

Beispiel 8

Wie Beispiel 1 mit Reaktionsinfiltration des porösen $Si_3N_4$-Körpers durch die Al(Mg)-Legierung in einem Bornitrid-beschichteten Stahltiegel bei 900 °C mit Aufheiz- und Abheizraten von 7 K/min ohne Haltezeit. Der poröse Siliziumnitridkörper wird vollständig durch Aluminium infiltriert, die Umsetzung des Siliziumnitrids mit Aluminium zu Aluminiumnitrid und Silizium erfolgt jedoch nur teilweise und verstärkt im unteren, zuerst infiltrierten Bereich, so daß ein Gradiengengefüge entsteht. An der Oberfläche, dem zuletzt infiltrierten Bereich, konzentriert sich aus der Redoxreaktion freigesetztes Silizium. Der Metallkeramikverbundkörper zeigt einen Phasengradienten zwischen den folgenden röntgenographisch bestimmten Zusammensetzungen: im unteren Bereich dominieren AlN und Al mit jeweils 35 Vol.-% neben 10 Vol.-% $Si_3N_4$ und 20 Vol.-% Si, während im oberen, zuletzt infiltrierten Bereich hauptsächlich Si mit ca. 70 Vol.-% neben AlN und $Si_3N_4$ mit jeweils 15 Vol.-% vorliegen.

Bespiel 9

Wie Beispiel 1 mit Reaktionsinfiltration in Stickstoff unter zunächst niedrigem Sauerstoffpartialdruck von < $10^{-20}$ Pa ($O_2$-Reduzierung durch Mg-Kondensat) bei 1000 °C und 15 minütiger Haltezeit. Durch periodische Luftzugabe (10 min Takt) bereits während der Aufheizperiode wird der $O_2$-Volumenanteil im Stickstoff zwischen 1,5 Vol.-% und < $10^{-5}$ Vol.-% verändert. Der entstehende metallkeramische Verbundkörper zeigt einen Gradienten der Zusammensetzung in Infiltrationsrichtung von unten nach oben. Unten: 60 Vol.-% AlN, 30 Vol.-% Al und jeweils ca. 5 Vol.-% $Si_3N_4$ und Si. Oben: 60 Vol.-% Si, 30 Vol.-% $Si_3N_4$ und 10 Vol.-% AlN.

Beispiel 10

Durch Übereinanderschichten mehrerer Platten 54 x 42 x 5 mm³ von Al-Mg2,5 im Wechsel mit wie in Beispiel 1 kaltisostatisch gepreßten Siliziumnitridformkörper 54 x 42 x 3 mm³ entsprechend der Anordnung in Bild 5 wird durch in-situ Nitridierung bei 1050 °C/ 12 h an Luft ein Metallkeramik/Metall-Verbundkörper in Sandwich-Bauweise erzeugt, in dem ca. 2 mm starke Al(Si)-Schichten in fester Bindung abwechselnd mit 3 mm starken AM(Al,Si)-Schichten vorliegen.

Beispiel 11

Reaktionsgebundenes Siliziumnitrid (RBSN, Annawerk) mit ca. 28 % Porosität und einer mittleren Porengröße von 160 nm wird durch Auflegen von Reinstaluminium (99,999 %, Kryal S, VAW, Bonn) und Aufschmelzen in Argonatmosphäre unter $O_2$-reduzieren-

den Bedingungen ($p_{O_2}$ < $10^{-20}$ Pa durch Mg-Kondensat im Ofenrohr) bei 900 °C/6 Std. drucklos infiltriert und zu AlN (Al, Si) mit Spuren an nichtreagiertem Siliziumnitrid umgesetzt. Die Vickershärte des metallkeramischen Verbundkörpers beträgt 10 GPa ($HV_{10}$).

Beispiel 12

Wie Beispiel 11 mit Infiltration des RBSN-Körpers im Drucksinterofen (ibv, Hamburg) bei einem Aufheizzyklus in Vakuum (10 K/min) auf 900 °C, Druckaufbau auf 8 MPa, 10 min Haltezeit bei 900 °C und Abheizen unter Druck. Der resultierende Verbundkörper zeigt nur geringe Umsetzung von Siliziumnitrid zu Aluminiumnitrid. Durch Auslagern der Proben in Argonatmosphäre (0,1 MPa, 900 °C) wird mit zunehmender Auslagerungszeit der Aluminiumnitrid- und Siliziumanteil erhöht, während der Siliziumnitrid- und Aluminiumanteil dementsprechend erniedrigt werden.

Beispiel 13

50 Vol.-% $Al_2O_3$ (Alcoa 3000) und 50 Vol.-% $Si_3N_4$ (LC-12, H. C. Starck, Berlin) werden durch attritieren innig miteinander vermischt, kaltisostatisch verpreßt (800 MPa) und in Luft vorgesintert (1300 °C/1 Std.). Durch Druckinfiltration mit Reinstaluminium wie in Beispiel 12 bei 2 stündiger Haltezeit entsteht ein $Al_2O_3$/AlN/Al/Si Verbundkörper der eine Vickers-Härte von 12 GPa ($HV_{10}$) aufweist.

Beispiel 14

Die Zusammensetzung des porösen Formkörpers aus Beispiel 13 wird nach dem Infiltrationszyklus von Beispiel 12 behandelt, wobei nach 10minütiger Haltezeit bei 900 °C ein $Al_2O_3$/$Si_3N_4$/Al-Körper nur mit Spuren von AlN und Si entsteht und durch entsprechende Auslagerung bei 900 °C/0,1 MPa Ar der AlN/Si Anteil auf Kosten des $Si_3N_4$- und Al-Anteils erhöht werden kann.

Beispiel 15

Wie Beispiel 1, unter Verwendung eines Bornitrid-beschichteten Stahltiegels, in dem der poröse Siliziumnitridkörper durch die Al-Mg2,5 Legierung in Argonatmosphäre reaktionsinfiltriert wird. Der entstehende AlN (Al, Si) Verbundkörper kann ohne aufwendiges Keraustrennen aus dem Tiegel entnommen werden.

Beispiel 16

Wie Beispiel 1, unter Verwendung eines verschließbaren Al-Mg2,8 Kohlkörpers, in den der poröse Siliziumnitridkörper raumausfüllend eingebracht wird. Die Reaktionsinfiltration des Al-gekapselten Siliziumnitrids erfolgt tiegellos auf einem grobkörnigen Al$_2$O$_3$-Pulverbett in einem Muffelofen unter Luftatmosphäre. Nach einstündiger Haltezeit bei 1000 °C kann der reaktionsinfiltrierte AlN (Al, Si)-körper während des Abkühlens bei etwa 700 °C aus der Schmelze entnommen werden und bedarf so nur geringer Oberflächenbehandlung um anhaftendes Al(Si) zu entfernen. Die durch halbquantitative Röntgenbeugungsanalyse bestimmte Zusammensetzung des reaktionsinfiltrierten Körpers beträgt ca. 60 Vol.-% AlN, ca. 35 Vol.-% Al und jeweils ca. 2 bis 3 Vol.-% Si und Si$_3$N$_4$. Bei Raumtemperatur wurden 508 ± 68 MPa 4-Punktbiegefestigkeit, 1,4 ± 0,2 GPa Druckfestigkeit, 4 ± 0,26 MPam$^{1/2}$ Bruchzähigkeit (ISB) und 7,3 GPa Härte (HV$_{20}$) gemessen. Die Kriechrate bei 1250 °C beträgt 3 x 10$^{-8}$s$^{-1}$ unter 50 MPa Auflast (3-Punktbiegung). Die Hochtemperaturfestigkeit des Materials ist zurückzuführen auf die dreidimensional vernetzte keramische Matrix sowie eine versiegelnde Al-Mg-Spinell Oberflächenschicht, welche die Oxidation weitgehend unterbindet.

Beispiel 17

Eine Pulvermischung von 50 Gew.-% Aluminiumpulver (< 50 µm) und 50 Gew.-% Siliziumnitridpulver (< 29 µm) wird durch attritieren (Al$_2$O$_3$-Kugeln, 400 U/min, 2 Std.) homogenisiert und vermahlen. Durch kaltisostatisches Pressen wird das Gemisch bei 800 MPa zu Stäbchen von 58 x 6,5 x 6,5 mm$^3$ mit 80 % relativer Dichte verpreßt. Der pulvermetallurgisch hergestellte Grünkörper wird bei 1050 °C/6Std. in Argonatmosphäre durch in-situ Reaktion unter weiterer Verdichtung zu AlN/Si mit geringem Restaluminiumanteil umgesetzt.

Beispiel 18

Etwa 10 Schichten eines zweidimensionalen Al$_2$O$_3$-Fasergewebes (Almax-Faden, Mitsui Mining, Japan) werden auf eine Al-2,5Mg Legierung gelegt und in Stickstoffatmosphäre bei 1000 °C kontrolliert durch Al unter AlN-Bildung infiltriert, wobei sich der Gehalt an MgAl$_2$O$_4$ aufgrund der Reaktion zwischen der Al$_2$O$_3$ Faser und dem verdampften und darauf kondensierten Mg durch periodisch von < 10$^{-20}$ Pa auf 10$^3$ Pa erhöhte Sauerstoffpartialdrucke während des Infiltrationsprozesses auf ein Minimum reduzieren läßt (durch Oxidation zu MgO) und damit die Bindung zwischen Faser und Matrix verringert bzw. variabel eingestellt werden kann.

**Patentansprüche**

1.  Metall-Keramik-Verbundkörper aus einer nitridischen Matrix, die Einlagerungen einer dreidimensional-vernetzten aluminiumhaltigen Metallphase enthalten, gekennzeichnet durch ein Durchdringungsgefüge von 15 - 50 Vol.-% Aluminium und 1 - 30 Vol.-% Silizium in einer Matrix aus feinverteiltem Aluminiumnitrid.

2.  Metall-Keramik-Verbundkörper nach Anspruch 1, dadurch gekennzeichnet, daß das Durchdringungsgefüge neben Aluminiumnitrid auch Aluminiumoxid aufweist.

3.  Metall-Keramik-Verbundkörper nach einem der vorhergehenden Ansprüche, dadurch gekennzeichnet, daß die AlSi-Metallphase 0,1 - 10 Gew.-% Magnesium enthält.

4.  Metall-Keramik-Verbundkörper nach einem der vorhergehenden Ansprüche, dadurch gekennzeichnet, daß die Volumenanteile der Metallphase einen linearen Anstieg in Abhängigkeit von der Porosität aufweisen.

5.  Metall-Keramik-Verbundkörper nach einem der vorhergehenden Ansprüche, dadurch gekennzeichnet, daß die Zusammensetzung der nitridischen Matrix innerhalb des Metall-Keramik-Verbundkörpers variiert, wobei sich ein linearer Gradient in den Gehalten der Keramikanteile einstellt.

6.  Metall-Keramik-Verbundkörper nach einem der vorhergehenden Ansprüche, dadurch gekennzeichnet, daß durch mehrere abwechselnd metallkeramische und metallische Schichten, die in fester Bindung miteinander stehen, ein Verbundkörper nach Sandwich-Bauart resultiert.

7.  Metall-Keramik-Verbundkörper nach einem der vorhergehenden Ansprüche, dadurch gekennzeichnet, daß die metallische Oberfläche des Verbundkörpers durch eine Metalloxidschicht versiegelt wird.

8.  Metall-Keramik-Verbundkörper nach einem der vorhergehenden Ansprüche, dadurch gekennzeichnet, daß das Durchdringungsgefüge intermetallische Verbindungen aus Titan, Nickel, Eisen, Kobalt, Zirkonium, Chrom, Molibdän, Hafnium, Lanthan enthält.

9.  Metall-Keramik-Verbundkörper nach einem der vorhergehenden Ansprüche, dadurch gekennzeichnet, daß das Durchdringungsgefüge inerte keramische Verstärkungskomponenten in Form von Partikeln, Platelets, Whisker und/oder Fasern in einer Menge von 10 - 80 Vol.-% enthält.

10. Metall-Keramik-Verbundkörper nach einem der vorhergehenden Ansprüche, dadurch gekennzeichnet, daß die keramischen Verstärkungskomponenten aus inerten Hartstoffen bestehen, die aus folgender Gruppe ausgewählt wurden: Oxide, Carbide, Nitride, Oxinitride oder Boride der Metalle Aluminium, Silizium, Titan, Zirkonium und/oder Chrom.

11. Metall-Keramik-Verbundkörper nach einem der vorhergehenden Ansprüche, dadurch gekennzeichnet, daß der Verbundkörper in Infiltrationsrichtung mindestens zwei Zonen aufweist, wobei in der ersten Zone Silizium und in der zweiten Zone Aluminiumnitrid und Aluminium dominieren.

12. Metall-Keramik-Verbundkörper nach einem der vorhergehenden Ansprüche, dadurch gekennzeichnet, daß der Verbundkörper in der ersten Zone 60 - 70 Vol.-% Silizium und in der zweiten Zone 35 - 60 Vol.-% Aluminium-Nitrid sowie 30 - 35 Vol.-% Aluminium aufweist.

13. Verfahren zur Herstellung eines Metall-Keramik-Verbundkörpers aus einer nitridischen Matrix, die Einlagerungen einer dreidimensional-vernetzten aluminiumhaltigen Metallphase enthalten, dadurch gekennzeichnet, daß ein poröser nitridischer keramischer Vorkörper mit einer Aluminiumschmelze infiltriert wird und solange bei Reaktionstemperatur gehalten wird, bis der Vorkörper vollständig mit der Metallschmelze zu Aluminiumnitrid-haltigem Aluminiumoxid-Aluminium-Silizium umgesetzt ist.

14. Verfahren nach Anspruch 13, dadurch gekennzeichnet, daß als Vorkörper ein Körper aus Siliziumnitrid und/oder amorphem oder kristallinem Siliziumoxid, Quarz- oder Silikatgläsern sowie quarz oder Silikaten verwendet wird.

15. Verfahren nach Anspruch 13, dadurch gekennzeichnet, daß die Reaktion des Vorkörpers mit der Metallschmelze durch Einstellung des Sauerstoffpartialdrucks in der Stickstoffatmosphäre in einer Zeit von 5 - 12 Stunden durchgeführt wird.

16. Verfahren nach einem der vorhergehenden Ansprüche, dadurch gekennzeichnet, daß die Nitridierungsgeschwindigkeit des Aluminiums durch den Sauerstoffpartialdruck im Stickstoffreaktionsgas gesteuert wird.

17. Verfahren nach einem der vorhergehenden Ansprüche, dadurch gekennzeichnet, daß man den porösen keramischen Vorkörper bei Temperaturen zwischen 800 und 1200 °C in Stickstoffatmosphäre mit einer flüssigen Aluminiumlegierung drucklos infiltriert und die Infiltrationszeit so einstellt, daß der Vorkörper mit der Metallschmelze zu Aluminiumnitrid reagiert.

18. Verfahren nach einem der vorhergehenden Ansprüche, dadurch gekennzeichnet, daß der Umsetzungsgrad der Aluminiumschmelze zum Nitrid durch Steuerung des Sauerstoffpartialdrucks der Gasatmosphäre im Bereich von $10^{-45}$ Pa - 0,021 MPa eingestellt wird.

19. Verfahren nach einem der vorhergehenden Ansprüche, dadurch gekennzeichnet, daß die Gasatmosphäre neben Stickstoff auch Edelgas und-/oder Luft enthält.

20. Verfahren nach einem der vorhergehenden Ansprüche, dadurch gekennzeichnet, daß der Gesamtgasdruck von $10^{-8}$ - $200^{MPa}$ beträgt.

21. Verfahren nach einem der vorhergehenden Ansprüche, dadurch gekennzeichnet, daß durch eine Redox-Reaktion das freigesetzte Metall des keramisches Vorkörpers im Aluminium gelöst wird, wobei die Grünkörperdichte des keramischen Vorkörpers so eingestellt wird, daß sich ein Volumenanteil von Silizium zwischen 1 und 30 % ergibt.

22. Verfahren nach einem der vorhergehenden Ansprüche, dadurch gekennzeichnet, daß der poröse infiltrierbare keramische Vorkörper als lose Schüttung vorliegt.

23. Verfahren nach einem der vorhergehenden Ansprüche, dadurch gekennzeichnet, daß der poröse infiltrierbare keramische Vorkörper durch kaltisostatisches Pressen und uniaxiales Pressen oder Strangpressen in eine Form mit 20 - 90 %-iger theoretischer Dichte gebracht wird.

24. Verfahren nach einem der vorhergehenden Ansprüche, dadurch gekennzeichnet, daß der Vorkörper durch Schlickerguß, Druckschlickerguß oder Spritzguß in eine Form gebracht wird.

25. Verfahren nach einem der vorhergehenden Ansprüche, dadurch gekennzeichnet, daß der Vorkörper als reaktionsgebundener Silizium-Nitrid-Körper mit 50 - 90 %-iger theoretischer Dichte vorliegt.

26. Verfahren nach einem der vorhergehenden Ansprüche, dadurch gekennzeichnet, daß die Form des porösen keramischen Vorkörpers nach der Reaktionsinfiltration und Umsetzung im wesentlichen erhalten bleibt und nur an der ursprünglichen Kontaktfläche mit dem Infiltrationsmetall verbunden ist, wobei sich der Metall-Keramik-Verbundkörper oberhalb des Metallreservoirs befindet.

27. Verfahren nach einem der vorhergehenden Ansprüche, dadurch gekennzeichnet, daß durch kontrollierte Infiltration des keramischen Vorkörpers durch die Metallschmelze bei lokal unvollständiger Reaktion ein Konzentrationsunterschied in der Zusammensetzung der Metallphase als auch der Keramikphase im Verbundwerkstoff entsteht.

28. Verfahren nach einem der vorhergehenden Ansprüche, dadurch gekennzeichnet, daß man den keramischen Vorkörper mit einem Dichte- bzw. Porositätsgradienten herstellt, diesen mit dem flüssigen Metall derart infiltriert, daß ein Gradient des Metallanteils in dem Metallverbundwerkstoff entsteht.

29. Verfahren nach einem der vorhergehenden Ansprüche, dadurch gekennzeichnet, daß der Konzentrationsausgleich zwischen einem während einer Austauschreaktion freigesetzten Metall und dem Infiltrationsmetall, das im Überschuß vorliegt, ein Gradient in der Zusammensetzung der Metallphase des Verbundwerkstoffes eingestellt wird.

30. Verfahren nach einem der vorhergehenden Ansprüche, dadurch gekennzeichnet, daß während der Infiltration der Partialdruck des Reaktionsgases und/oder das Reaktionsgas selbst verändert wird, so daß ein Phasengradient im Reaktionsprodukt entsteht.

31. Verfahren nach einem der vorhergehenden Ansprüche, dadurch gekennzeichnet, daß durch Übereinanderschichten von mehreren porösen Metall-Nitrid-Lagen abwechselnd mit Metallagen nach Reaktionsinfiltration ein Metallnitrid-Metallverbundkörper mit Sandwichaufbau gebildet wird.

32. Verfahren nach einem der vorhergehenden Ansprüche, dadurch gekennzeichnet, daß der Metall-Keramik -Verbundkörper durch Temperaturbehandlung an Luft unter Bildung einer passivierenden Oxidschicht bzw. Oxinitridschicht versiegelt wird.

33. Verfahren nach einem der vorhergehenden Ansprüche, dadurch gekennzeichnet, daß eine Metallnitrid-Metallpulvermischung auf bis zu 95 %-ige theoretische Dichte verdichtet wird und nachfolgend bei Temperaturen zwischen 600 und 1500 °C nitridiert wird.

Bild 1: Bauteile des erfindungsgemäßen AlN(Al,Si) Verbundwerkstoffes

1cm

Bild 2:    Anordnungen des porösen Nitridvorkörpers
           und der Metallegierung

Si₃N₄(porös)

Al(Mg)

a

Al(Mg)

Si₃N₄(porös)

Al(Mg)

b

Al(Mg)

Si₃N₄(porös)

c

Bild 3:    Modellvorstellung des Mechanismus der Reaktions-
           infiltration und internen Nitridierung zur Herstellung
           von AlN(Al,Si)-Verbundkörpern

| <660°C | 660°C-1000°C | 1000°C/ca.1h (>900°C) | 1000°C/ca.5h | RT |
|---|---|---|---|---|

(SN)

(Al(Mg))

(a)

(Mg) (SN) {Mg} (Mg)

{Al(Mg)}

(b)

(SN) {Al} SN(Al)   Infiltrations-front

{Al}

(c)

SN(Al) AlN(Si)   Reaktions-front

Si   {Al(Si)}   Si

(d)

(AlN(Si) +(Al)

(Al+Si)

(e)

11

Bild 4a:    Lichtmikroskopische Gefügeaufnahme eines der erfindungsgemäßen AlN/Al/Si-Verbundwerkstoffe bei 1273 K
hergestellt durch Al-Reaktionsinfiltration eines
groben <30 μm $Si_3N_4$-Körpers mit 60 % T.D.

20 μm

Bild 4b:    TEM-Gefügeaufnahme eines Dünnschliffs des erfindungsgemäßen Verbundkörpers mit der charakteristischen Kornfeinerung

200 nm

**Bild 4c:** Lichtmikroskopische Gefügeaufnahme des erfindungsgemäßen AlN(Al,Si) hergestellt durch Al-Reaktionsinfiltration von feinkörnigem 0,5 µm $Si_3N_4$ auf
60 %ige T.D. verpreßt

20 µm

**Bild 4d:** REM-Aufnahme des HF-geätzten Anschliffs einer der
erfindungsgemäßen AlN(Al,Si)-Verbundkörper mit
AlN/Si-Agglomeraten

5 µm

Bild 4e: REM-Aufnahme eines HF-geätzten Anschliffs eines durch Schmelznitridierung nach dem DIMOX$^{TM}$-Prœeß hergestellten AlN/Al-Verbundkörper mit gerichtetem AlN-Stengelkristallwachstum

Bild 5: Sandwich-Anordnung (a) vor und (b) nach der Reaktionsinfiltration

Bild 6: Anordnung zur Herstellung eines AlN-Al,Si Gradientenwerkstoffes (a) und (b) nach der Reaktionsinfiltration

**Europäisches**
**Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P | WO-A-9 112 350 (SINVENT)<br><br><br>* Seite 4; Ansprüche 1,2,4 *<br>--- | 1,3,13,<br>14,17,<br>19-22,<br>25,26 | C04B35/58<br>C04B35/65<br>B32B18/00<br>C22C29/16 |
| A,D | WO-A-9 001 472 (N. CLAUSSEN)<br>* Seite 7, Absatz 2; Ansprüche 1-6,18-21,27-29 *<br><br>----- | 1-33 | |

**RECHERCHIERTE SACHGEBIETE (Int. Cl.5)**

C04B
B32B
C22C

Der vorliegende Recherchenbericht wurde für alle Patentansprüche erstellt

| Recherchenort | Abschlußdatum der Recherche | Prüfer |
|---|---|---|
| DEN HAAG | 20 AUGUST 1992 | HAUCK H.N. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..................................................................................
& : Mitglied der gleichen Patentfamilie, übereinstimmendes
    Dokument

EPO FORM 1503 03.82 (P0403)